# EUROPÄISCHE PATENTSCHRIFT

(11) **EP 3 081 907 B1**
(45) Veröffentlichungstag und Bekanntmachung des Hinweises auf die Patenterteilung: **29.07.2020**
(21) Anmeldenummer: 16163969.5
(22) Anmeldetag: 06.04.2016
(51) Int. Cl.: G01D 21/00

(54) **ANORDNUNG, SYSTEM UND VERFAHREN FÜR EINE ÜBERWACHUNG VON GASGEFÜLLTEN BEHÄLTERN**
ASSEMBLY, SYSTEM AND METHOD FOR MONITORING CONTAINERS FILLED WITH GAS
AGENCEMENT, SYSTEME ET PROCEDE POUR LA SURVEILLANCE DE RECIPIENTS REMPLIS DE GAZ

(30) Priorität: 16.04.2015 DE 102015206873
(43) Veröffentlichungstag der Anmeldung: 19.10.2016
(73) Patentinhaber: Siemens Aktiengesellschaft, 80333 München (DE)
(72) Erfinder: Brand, Bastiaan, 1223 HM Hilversum (NL)

(56) Entgegenhaltungen:
- EP-B1- 1 238 246
- WO-A1-2012/140310
- DE-A1- 19 703 854
- DE-A1-102007 017 632
- US-A1- 2003 107 483
- US-B1- 6 367 308

## Beschreibung

Die Erfindung betrifft eine Anordnung nach dem Oberbegriff des Anspruch 1, ein System nach Anspruch 6 sowie ein entsprechendes Verfahren nach Anspruch 10.

Elektrische Anlagen wie z.B. Hochspannungsschaltanlagen sind häufig mit einem Schutzgas wie z.B. Schwefelhexafluorid (SF₆) isoliert. SF₆ ist jedoch klimaschädlich und die Hersteller sowie die Betreiber der elektrischen Anlagen erhalten immer strengere Auflagen, SF₆ Verluste in die Atmosphäre zu vermeiden. Neuere Richtlinien erfordern beispielsweise, dass weniger als 0.5 % des SF₆ einer Anlage pro Jahr an die Umwelt abgegeben werden. Außerdem wird seit 2015 eine Überwachung des SF₆-Drucks und der SF₆-Gasdichte mindestens alle 6 Monate sowie das Führen eines Protokolls über den zeitlichen Verlauf des SF₆-Drucks und der SF₆-Gasdichte verlangt, wobei diese Regeln für alle Anlagen mit mehr als 22 kg des Schutzgases gelten. Dies schließt so gut wie alle Hochspannungsanlagen ein.

Derzeit werden zur Überwachung der elektrischen Anlagen häufig analoge Gasdruck- oder Gasdichtemesseinrichtungen einsetzt, die an der Anlage angebracht werden und vor Ort durch einen Techniker abgelesen werden müssen. Fällt der Gasdruck oder die Gasdichte unter vorher festgelegte Schwellenwerte, wird ein Alarm ausgelöst und/oder die elektrische Anlage wird direkt abgeschaltet, um Fehler und Schäden an der Anlage zu vermeiden. Dies stellt ein Problem für die Zuverlässigkeit eines Energieverteilungsnetzes dar, weil der Ausfall einer elektrischen Anlage wegen Schutzgasverlusten nicht vorhergesagt werden kann - entweder die Schwellenwerte werden nicht unterschritten und die Anlage bleibt in Betrieb oder die Schwellenwerte werden unterschritten und es kommt zum Ausfall bzw. einer Abschaltung. Aus diesem Grund werden die eingangs erwähnten Protokolle gefordert, denn anhand dieser Aufzeichnungen lassen sich Gasverluste im zeitlichen Verlauf erkennen und anhand der Gasverlustrate die Notwendigkeit einer Wartung der elektrischen Anlage mit entsprechender Wiederherstellung des benötigten Schutzgasdrucks vorausberechnen.

Dennoch ergeben sich auch bei einer periodischen Überwachung Probleme, weil viele ältere elektrische Anlagen derzeit über keine geeigneten Gasdruck- oder Gasdichtemesseinrichtungen und teuer nachgerüstet werden müssten. Außerdem sind Hochspannungsanlagen nicht immer leicht für Techniker zu erreichen und abzulesen, was die Überwachung dieser Anlagen erschwert und verteuert.

Werden digitale Messeinrichtungen und Online-Überwachungssysteme eingesetzt, so müssen diese für ihre Energieversorgung mit Niederspannung versorgt werden. Dies ist oftmals jedoch nur technisch aufwändig mit einem Messwandler und damit teuer bereit zu stellen, insbesondere wenn alte Anlagen mit modernen Messeinrichtungen aufgerüstet werden sollen. Weiterhin müssen Datenverarbeitungseinrichtungen eingesetzt werden, die die Messdaten vor Ort auswerten und z.B. Gasdruck- und Gastemperaturwerte in Gasdichtewerte umrechnen.

Ferner ist die Veröffentlichung "Ambient Backscatter: Wireless Communication Out of Thin Air" von Vincent Liu et al., University of Washington, erschienen bei SIGCOMM'13, August 12-16, 2013, Hong Kong, China, bekannt. Darin werden Geräte beschrieben, die miteinander kommunizieren können und dabei lediglich umgebende elektromagnetische Strahlung ("ambient radiofrequency signals") wie etwa Fernsehsignale verwenden zur Energieversorgung benötigen. Dabei wird eine Technik namens "Ambient Backscatter" eingesetzt, bei der die umgebende elektromagentische Strahlung von einem Gerät in modifizierter Form zurückgestreut wird, um Informationen wie z.B. Signale eines Berührungssensors zu übertragen. Weil die Geräte keine eigene elektromagnetische Strahlung erzeugen, sind sie besonders energiesparsam. Ein Prototyp erreicht Datenübertagungsraten von bis zu 1 kbps bei einer Entfernung von bis zu 2,5 Fuß zwischen den Geräten.

Weiterhin ist der Website-Artikel "Battery-less wireless temperature sensors based on low power UHF RFID tags", 10. Juni 2013 von Mikel Choperena bekannt ("http://www.sensorsmag.com/product/development-platformadvances-battery-free-sensors-and"), der Sensoren der Firma Farsens beschreibt. Diese Sensoren nutzen RFID mit ultrahochfrequenten Signalen (ca. 900 MHz) und messen Temperatur, Druck, Luftfeuchtigkeit, etc. Als eine Einsatzmöglichkeit werden Sensoren für die Brandvermeidung bei elektrischen Schaltanlagen genannt. Die Reichweite der Datenkommunikation beträgt bis zu 1,5 m.

Ein ähnliches System wird auch in der Bedienungsanleitung "STANDALONE SOFTWARE USER GUIDE; UG-STANDALONESW-V03" der Firma Farsens vom April 2014 beschrieben. Dabei wird eine Software beschrieben, mit der Sensordaten des Sensors "ANDY100" verarbeitet werden können. Ein solcher Sensor ist aus der Produktbroschüre "EPC C1G2 COMPLIANT BATTERYLESS SENSOR/ACTUATOR DEVELOPMENT PLATFORM POWERED BY ANDY100 PB-MEDUSA-V01" der Firma Farsens aus dem September 2014 bekannt.

Es stellt sich an die Erfindung die Aufgabe, eine Anordnung für eine Überwachung von gasgefüllten Behältern bereit zu stellen, mit der automatisch und einfach eine Überwachung durchgeführt werden kann, ohne dass zusätzlicher Anschluss an ein Energieversorgungsnetz zur Energieversorgung der Anordnung bereitgestellt werden muss.

Ferner ist aus der Druckschrift EP 1238246 B1 eine gattungsgemäße Anordnung bekannt. Auch die Druckschriften US 2003/107483 A1, WO 2012/14310 A1, DE 19703854 A1 und DE 102007017632 A1 beschäftigen sich mit Anordnungen, die kabellos mit Energie versorgt werden und Messwerte an Auswerteeinrichtungen übermitteln können. Aus der Druckschrift US 6367308 A1 ist eine Vorrichtung zur Dichtebestimmung eines gasgefüllten Behälters bekannt.

Die Erfindung löst diese Aufgabe durch eine Anordnung gemäß Anspruch 1.

Dies ist ein Vorteil, weil Kosten und Wartungsaufwand für das Bereitstellen eines Anschlusses an ein Energieversorgungsnetz vermieden wird. Insbesondere ist es nicht erforderlich, mittels eines Messwandlers z.B. aus der an einer gasisolierten elektrischen Anlage anliegenden Hochspannung eine für die Spannungsversorgung der erfindungsgemäßen Anordnung geeignete Spannung zu erzeugen. Als Quellen der elektromagnetischen Strahlung bieten sich TV-Signale, Radiosignale oder Kommunikationsnetze wie 3G, 4G, etc. an, die in vielen Ländern nahezu flächendeckend verfügbar sind. Auch elektromagnetische Strahlung nahe Hochspannungsleitungen kann genutzt werden.

Dabei ist es i.d.R. vorteilhaft, Messeinrichtungen mit vergleichsweise niedrigem Energiebedarf einzusetzen, wie sie beispielsweise aus den eingangs genannten RFID-Sensoren der Firma Farsens bekannt sind.

Die Informationen über das Gas können die gemessenen Parameter und/oder andere Informationen umfassen, beispielsweise wenn direkt in der Anordnung eine Weiterverarbeitung der gemessenen Parameter erfolgt.

In einer bevorzugten Ausführungsform der erfindungsgemäßen Anordnung wird eine zusätzliche Quelle von elektromagnetischer Strahlung eingesetzt, um mittels der Energieversorgungseinrichtung mehr elektrische Energie zu erzeugen. Es kann als zusätzliche Quelle z.B. eine WIFI, TV, Radio oder Lichtquelle eingesetzt werden. Dabei kann eine kontinuierliche Abstrahlung erfolgen, oder es können zeitlich kurze Strahlungsimpulse eingesetzt werden. Es ist ein Vorteil dieser kabellosen zusätzlichen Energieversorgung, dass am Einsatzort z.B. einer Schaltanlage mit mehreren Behältern, mit geringem Aufwand nur eine zusätzliche Quelle von elektromagnetischer Strahlung bereit gestellt werden muss, die ggf. ihrerseits durch Solarenergie versorgt werden kann, falls kein Energieversorgungsnetzanschluss bereit steht. Als zusätzliche Quelle kann auch die Auswerteeinrichtung eingerichtet sein, die dann nicht nur Messdaten empfängt, sondern auch Energie abstrahlt.

Die Messeinrichtung der Anordnung umfasst eine Gasdruckmesseinrichtung. Dies ist ein Vorteil, weil der Druck des Gases im Behälter Rückschlüsse auf die Dichtigkeit des Behälters gestattet.

Die Messeinrichtung umfasst eine Temperaturmesseinrichtung. Dies ist ein Vorteil, weil die Kenntnis der Temperatur in Verbindung mit dem Druck des Gases im Behälter Rückschlüsse auf die Dichte des Gases gestattet.

In einer weiteren bevorzugten Ausführungsform der erfindungsgemäßen Anordnung ist die Kommunikationseinrichtung für die Herstellung einer Funkverbindung mit der Auswerteeinrichtung geeignet. Dies ist ein Vorteil, weil Funkverbindungen einfach, kostengünstig und flexibel einsetzbar sind.

In einer bevorzugten weiteren bevorzugten Ausführungsform der erfindungsgemäßen Anordnung ist die Kommunikationseinrichtung für die Herstellung einer Funkverbindung mit benachbarten Anordnungen geeignet. Dies ist ein Vorteil, weil so z.B. bei mehreren zu überwachenden Anlagen ein Kommunikationsnetzwerk gebildet werden kann. Dabei kann gemeinsam für alle oder einen Teil der Teilnehmer des Netzwerks eine einzige Auswerteeinrichtung vorgesehen sein.

Die Energieversorgungseinrichtung ist geeignet, elektromagnetische Strahlung im Radiofrequenzband und/oder im Frequenzband für TV-Signale und/oder im Frequenzband für Mobilfunk für die Energiegewinnung zu nutzen. Dies ist ein Vorteil, weil im Radiofrequenzband mit TV-Signalen und/oder Radiosignalen und/oder Mobilfunk wie etwa 3G oder 4G nahezu flächendeckend eine Energieversorgung gesichert ist.

In einer weiteren bevorzugten Ausführungsform der erfindungsgemäßen Anordnung ist die Energieversorgungseinrichtung geeignet, Licht mittels Solarzellen für die Energiegewinnung zu nutzen. Dies ist ein Vorteil, weil die Energiegewinnung mittels Solarzellen lange erprobt und zuverlässig ist.

In einer weiteren bevorzugten Ausführungsform der erfindungsgemäßen Anordnung ist ein Energiespeicher für das Zwischenspeichern der von der Energieversorgungseinrichtung erzeugten elektrischen Energie vorgesehen. Dies ist ein Vorteil, weil auf diese Weise auf eine sehr niedrige kontinuierliche Energieerzeugung eine wesentlich höhere Energiemenge erzeugen kann, mit der beispielsweise periodisch ein Mal pro Tag eine Messung von Parametern des Gases ermöglicht wird.

Die Auswerteeinrichtung ist geeignet, aus den gemessenen Parametern Gasdruck und Temperatur die Dichte des Gases zu berechnen. Dies ist ein Vorteil, weil so eine Weiterverarbeitung und Auswertung der gemessenen Parameter zentral bei der Auswerteeinrichtung erfolgen kann und in jeder einzelnen Anordnung keine eigene Rechenkapazität vorgesehen werden muss. Dies spart im Betrieb Energie, wodurch die Energieversorgungseinrichtung kleiner ausgelegt werden kann. Außerdem werden Kosten eingespart. Es erfolgt mit der Kommunikationseinrichtung eine Übertragung der gemessenen Parameter an die Auswerteeinrichtung.

In einer weiteren bevorzugten Ausführungsform der erfindungsgemäßen Anordnung ist eine Rechnereinrichtung vorgesehen, die geeignet ist, aus den gemessenen Parametern Gasdruck und Temperatur die Dichte des Gases zu berechnen. Dies ist ein Vorteil, weil so eine Weiterverarbeitung und Auswertung der gemessenen Parameter lokal bei der Anordnung erfolgen kann. Es erfolgt mit der Kommunikationseinrichtung eine Übertragung der berechneten Gasdichte an die Auswerteeinrichtung. Dies ist ein Vorteil, weil so sämtliche benötigte Funktionalität zur Ermittlung der Gasdichte in der Anordnung vorgesehen ist und die Auswerteeinrichtung lediglich eine Schnittstelle zum Empfang der Gasdichte benötigt.

In einer weiteren bevorzugten Ausführungsform der erfindungsgemäßen Anordnung ist die mindestens eine Messeinrichtung einer Anschlussvorrichtung zugeordnet, die zum Anschließen an einen Behälter geeignet ist. Dies ist ein Vorteil, weil dadurch keine zusätzliche Öffnung in einen bestehenden Behälter eingebracht werden muss, sondern z.B. eine Gaseinfüllvorrichtung einer gasiolierten Schaltanlage genutzt werden kann, um eine automatische Überwachung des Gases im Behälter umzusetzen.

Ferner stellt sich an die Erfindung die Aufgabe, ein System für eine Überwachung von gasgefüllten Behältern bereit zu stellen, mit dem automatisch und einfach eine Überwachung durchgeführt werden kann, ohne dass zusätzlicher Anschluss an ein Energieversorgungsnetz zur Energieversorgung der Anordnung bereitgestellt werden muss.

Die Erfindung löst diese Aufgabe durch ein System gemäß Anspruch 6. Bevorzugte und vorteilhafte Ausführungsformen ergeben sich aus den Unteransprüchen 7 bis 9. Dabei ergeben sich für das erfindungsgemäße System und seine Ausführungsformen jeweils sinngemäß die gleichen Vorteile wie eingangs für die erfindungsgemäße Anordnung geschildert.

Ferner stellt sich an die Erfindung die Aufgabe, ein Verfahren für eine Überwachung von gasgefüllten Behältern bereit zu stellen, mit dem automatisch und einfach eine Überwachung durchgeführt werden kann, ohne dass zusätzlicher Anschluss an ein Energieversorgungsnetz zur Energieversorgung der Anordnung bereitgestellt werden muss.

Die Erfindung löst diese Aufgabe durch ein Verfahren gemäß Anspruch 10. Dabei ergeben sich für das erfindungsgemäße Verfahren sinngemäß die gleichen Vorteile wie eingangs für die erfindungsgemäße Anordnung geschildert.

Zur besseren Erläuterung der Erfindung zeigen die
- Figur 1: ein Anwendungsbeispiel des erfindungsgemäßen Systems und
- Figur 2: eine bekannte Verschlusseinrichtung für eine Gaseinfüllvorrichtung eines Behälters und
- Figur: 3 ein Ausführungsbeispiel eines erfindungsgemäßen Systems und
- Figur 4: ein Ausführungsbeispiel einer erfindungsgemäßen Anordnung.

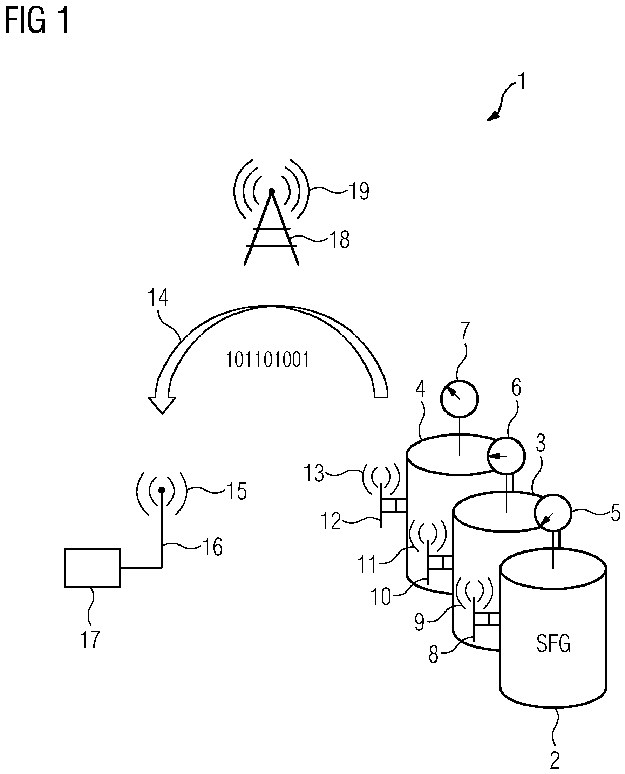

In der Figur 1 ist eine Schaltanlage 1 schematisch dargestellt. Drei mit dem Schutzgas gefüllte SF₆ gefüllte Behälter 2,3,4 - in diesem Fall gasisolierte Hochspannungsschaltanlagen - weisen jeweils eine analoge Messeinrichtung 5,6,7 auf, die die Gasdichte anzeigt. Dabei deuten die Pfeile in den Messeinrichtungen 5,6,7 die Anzeige der Gasdichte auf einer analogen Skala an.

Jeder der Behälter 2,3,4 weist an seiner Gaseinfüllvorrichtung eine erfindungsgemäße Anordnung 8, 10, 12 auf, die die umgebende elektromagnetische Strahlung 19 einer Strahlungsquelle 18 - ein TV-Sendemast - zur Energiegewinnung nutzen.

Die Anordnungen 8, 10, 12 übermitteln die gemessenen Parameter des Gases, in diesem Fall die Temperatur und der Gasdruck, über Funkverbindungen 9, 11, 13 wie etwa W-LAN an eine Auswerteeinrichtung 17. Die digitale Übertragung der Daten ist angedeutet durch den Pfeil 14 und das Signal 101101001.

Die Auswerteeinrichtung 17 weist eine Antenne 16 für Empfang und/oder Senden von Funksignalen 15 auf und ist eingerichtet, aus den gemessenen Parametern Gasdruck und Temperatur die Dichte des Gases zu berechnen. Damit kann über den zeitlichen Verlauf mehrerer Messungen genau festgestellt werden, mit welcher Rate ein Gasverlust innerhalb des Behälters erfolgt. Die Auswerteeinrichtung 17 kann mittels ihrer Sendefunktion zusätzlich zu der Strahlungsquelle 18 oder auch anstatt der Strahlungsquelle 18 elektromagnetische Strahlung für die Energieversorgung der Energieversorgungseinrichtungen der Anordnungen bereitstellen.

Die Auswerteeinrichtung 17 ist in diesem Beispiel nahe bei den einzelnen Behältern angeordnet, sie könnte aber bei entsprechend weiterreichenderen Kommunikationsmitteln wie etwa einer Internetverbindung auch an beliebiger Stelle weltweit angeordnet sein.

Es ist ein Vorteil des erfindungsgemäßen Systems, dass an keinem der Behälter extra eine Stromversorgung bzw. ein Energienetzanschluss für die Anordnungen 8, 10, 12 eingerichtet werden muss.

Vielmehr kann ein bestehender Behälter an seiner üblicherweise bereits vorhandenen Gaseinfüllvorrichtung mit der erfindungsgemäßen Anordnung 8, 10, 12 nachgerüstet werden.

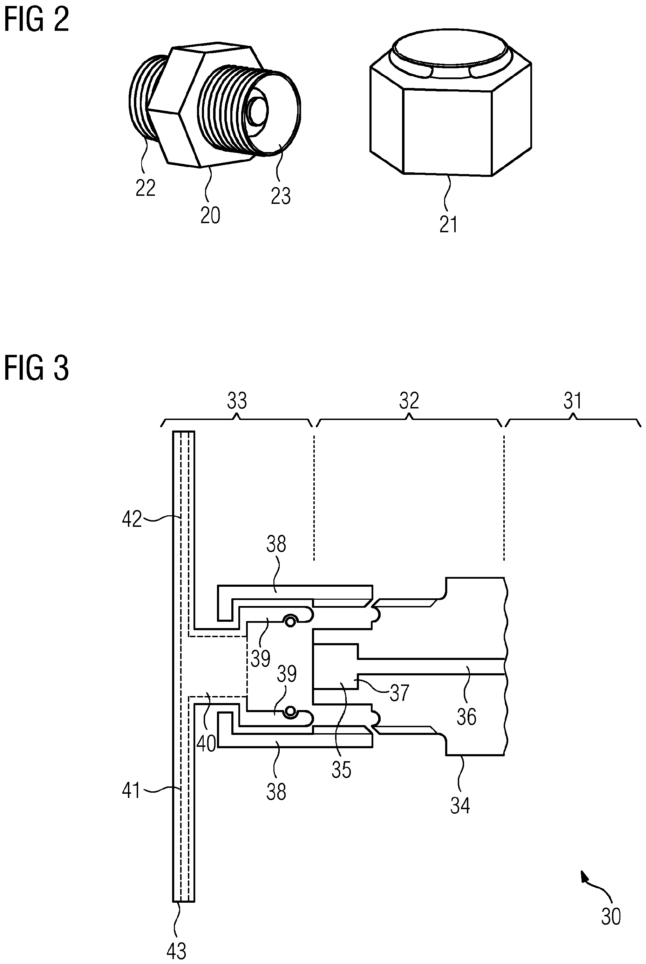

Die Figur 2 zeigt eine bekannte Verschlusseinrichtung 21 für eine Gaseinfüllvorrichtung 20 eines Behälters, wobei die Gaseinfüllvorrichtung 20 eine Rückseite 22 und eine Vorderseite 23 mit einem Ventil aufweist. Soll die erfindungsgemäße Anordnung anstatt der gezeigten Verschlusseinrichtung 21 eingesetzt werden, um einen bestehenden Behälter nachzurüsten, muss die erfindungsgemäße Anordnung zur Verwendung mit der Gaseinfüllvorrichtung 20 geeignet sein.

In der Figur 3 ist ein Ausführungsbeispiel eines erfindungsgemäßen Systems 30 schematisch dargestellt. Im Bereich 31 befindet sich ein Behälter, der mit dem Schutzgas SF₆ befüllt ist.

Im Bereich 32 ist eine übliche Gaseinfüllvorrichtung 20 am Behälter angebracht. Diese weist einen Sockel 34 mit einer Ausbuchtung 35 auf, in der sich eine Kammer 37 und eine Durchgangsöffnung 36 befinden. Kammer 37 und Durchgangsöffnung 36 bilden eine fluidleitende Verbindung mit dem Behälter und enthalten daher das Gas. Die Kammer ist zur linken Seite hin offen.

Im Bereich 33 ist eine erfindungsgemäße Anordnung gezeigt, die zur besseren Übersichtlichkeit noch nicht voll auf die Gaseinfüllvorrichtung 20 geschoben ist (in Pfeilrichtung). Die Anordnung weist einen Mantel 38 und eine Buchse 39 mit Dichtmitteln (schwarze Punkte) auf. Am Grund der Buchse 39 befindet sich ein Mittelteil 40.

Ist die Anordnung komplett auf die Gaseinfüllvorrichtung 20 geschoben, so umgreift der Mantel 38 den linken Teil des Sockels 34 und die Buchse 39 umschließt die Ausbuchtung 35, so dass die Kammer 37 an dem Mittelteil 40 anliegt. Auf diese Weise liegt im Betrieb des Systems das Gas SF₆ am Mittelteil der Anordnung vor.

Der Mittelteil 40 der Anordnung weist eine Gasdruckmesseinrichtung und eine Temperaturmesseinrichtung auf, mit denen Gasdruck und Temperatur des SF₆ bestimmt werden können.

In einer Weiterbildung der Anordnung können zusätzlich im Mittelteil eine Rechnereinrichtung zur Steuerung der Anordnung und Verarbeitung der gemessenen Parameter sowie ein Energiespeicher vorgesehen sein.

An den Mittelteil 40 grenzt ein Außenteil 43, das einerseits eine Energieversorgungseinrichtung 41 aufweist, die geeignet ist, aus der umgebenden elektromagnetischen Strahlung elektrische Energie zu gewinnen. Andererseits weist das Außenteil 43 eine Kommunikationseinrichtung 42 auf, die für eine Übermittlung der gemessenen Parameter an eine Auswerteeinrichtung geeignet ist.

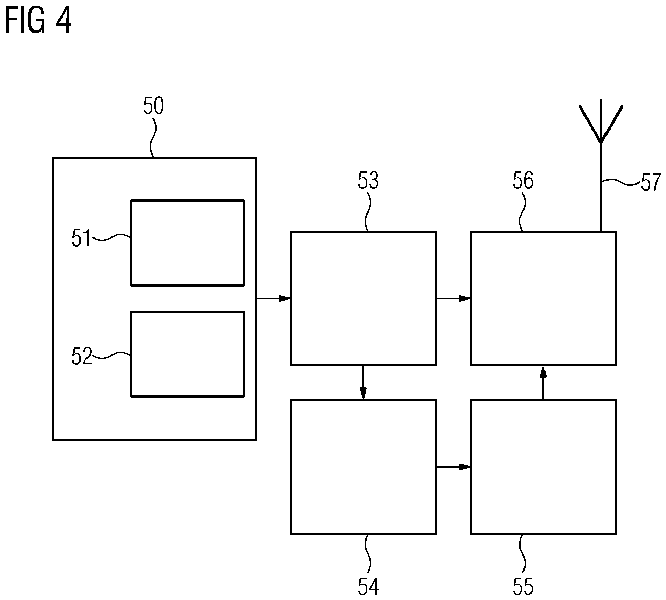

Die Figur 4 zeigt ein Ausführungsbeispiel einer erfindungsgemäßen Anordnung mit einer Energieversorgungseinrichtung 50, die geeignet ist, aus der umgebenden elektromagnetischen Strahlung elektrische Energie zu gewinnen. Dabei kommt eine erste Energiegewinnungseinrichtung 51 zu Gewinnung von elektrischer Energie aus umgebenden Funkwellen wie z.B. TV-Signalen und/oder Radiosignalen und/oder eine zweite Energiegewinnungseinrichtung 52 zu Gewinnung von elektrischer Energie aus Licht zum Einsatz.

Die gewonnene elektrische Energie wird in einem Energiespeicher 53 zwischengespeichert und bei Bedarf, z.B. periodisch einmal pro Tag, verwendet, um mittels einer Messeinrichtung 54 Gasdruck und Temperatur zu bestimmen und an eine Rechnereinrichtung 55 zu übermitteln. Die Rechnereinrichtung 55 verarbeitet die gemessenen Parameter und kann anhand einer auf das Schutzgas SF₆ abgestimmten Berechnungsvorschrift aus dem Gasdruck und der Temperatur die Dichte des Schutzgases im Behälter berechnen.

Schließlich wird der berechnete Dichtewert und ggf. die gemessenen Parameter über eine Kommunikationseinrichtung 56 mit Antenne 57 zur weiteren Verarbeitung per Funk übertragen. Dabei wird die Kommunikationseinrichtung 56 ebenfalls durch den Energiespeicher 53 versorgt.

## Patentansprüche

1. Anordnung für eine Überwachung von gasgefüllten Behältern, aufweisend:
mindestens eine Messeinrichtung für das Messen mindestens eines Parameters des Gases im Behälter,
eine Kommunikationseinrichtung (42), die für eine Übermittlung von Informationen über das Gas an eine Auswerteeinrichtung geeignet ist,
eine Energieversorgungseinrichtung (41), die geeignet ist, aus der umgebenden elektromagnetischen Strahlung elektrische Energie zu gewinnen,
wobei die Energieversorgungseinrichtung (41) geeignet ist, elektromagnetische Strahlung im Radiofrequenzband und/oder im Frequenzband für TV-Signale und/oder im Frequenzband für Mobilfunk für die Energiegewinnung zu nutzen, **dadurch gekennzeichnet dass**
die mindestens eine Messeinrichtung eine Gasdruckmesseinrichtung und eine Temperaturmesseinrichtung umfasst, wobei die Auswerteeinrichtung geeignet ist, aus den gemessenen Parametern Gasdruck und Temperatur die Dichte des Gases zu berechnen, und dass
die Anordnung zur Nachrüstung eines Behälters auf eine Gaseinfüllvorrichtung des Behälters schiebbar ist, und dass die mindestens eine Messeinrichtung in einem Mittelteil (40) der Anordnung vorgesehen ist, der an die Gaseinfüllvorrichtung mit dem gasgefüllten Behälter grenzt, und dass die Anordnung eine Buchse (39), die auf die Gaseinfülleinrichtung schiebbar ist, den Mittelteil (40) am Grund der Buchse (39) und einen Außenteil (43), welches an den Mittelteil (40) angrenzt, aufweist, und
dass
der Außenteil (43) die Energieversorgungseinrichtung (41) und die Kommunikationseinrichtung (42) aufweist.

2. Anordnung nach Anspruch 1, **dadurch gekennzeichnet, dass** die Kommunikationseinrichtung für die Herstellung einer Funkverbindung mit der Auswerteeinrichtung geeignet ist.

3. Anordnung nach Anspruch 1 oder 2, **dadurch gekennzeichnet, dass** die Energieversorgungseinrichtung geeignet ist, Licht mittels Solarzellen für die Energiegewinnung zu nutzen.

4. Anordnung nach einem der vorhergehenden Ansprüche, **dadurch gekennzeichnet, dass** ein Energiespeicher für das Zwischenspeichern der von der Energieversorgungseinrichtung erzeugten elektrischen Energie vorgesehen ist.

5. Anordnung nach einem der vorhergehenden Ansprüche, **dadurch gekennzeichnet, dass** die mindestens eine Messeinrichtung einer Anschlussvorrichtung zugeordnet ist, die zum Anschließen an einen Behälter geeignet ist.

6. System für eine Überwachung von gasgefüllten Behältern, aufweisend:
eine Anordnung nach einem der vorhergehenden Ansprüche und einen gasgefüllten Behälter.

7. System nach Anspruch 6, **dadurch gekennzeichnet, dass** der Behälter eine elektrische Anlage ist, die mit einem Schutzgas gefüllt ist.

8. System nach Anspruch 7, **dadurch gekennzeichnet, dass** das Schutzgas Schwefelhexafluorid umfasst.

9. System nach einem der Ansprüche 6 bis 8, **dadurch gekennzeichnet, dass** die Anordnung zur Nachrüstung eines Behälters an dessen bestehender Gaseinfüllvorrichtung geeignet ist.

10. Verfahren für eine Überwachung von gasgefüllten Behältern, bei dem
aus der einen gasgefüllten Behälter umgebenden elektromagnetischen Strahlung elektrische Energie zur Energieversorgung mindestens einer Messeinrichtung und einer Kommunikationseinrichtung gewonnen wird, und
mittels der mindestens Messeinrichtung mindestens ein Parameter des Gases im Behälter gemessen wird, und Informationen über das Gas mittels einer Kommunikationseinrichtung (42) an eine Auswerteeinrichtung übermittelt werden, wobei mittels der mindestens einen Messeinrichtung die Parameter Gasdruck und Temperatur gemessen werden, und
aus den gemessenen Parametern die Dichte des Gases berechnet wird, und für die elektromagnetische Strahlung das Radiofrequenzband und/oder das Frequenzband für TV-Signale und/oder das Frequenzband für Mobilfunk für die Energiegewinnung genutzt werden, und die mindestens eine Messeinrichtung und die Kommunikationseinrichtung (42) als Teil einer Anordnung zur Nachrüstung eines Behälters auf eine Gaseinfüllvorrichtung des Behälters aufgeschoben werden, und die Anordnung eine Buchse (39), die auf die Gaseinfülleinrichtung schiebbar ist, einen Mittelteil (40) am Grund der Buchse und einen Außenteil (43), welches an den Mittelteil (40) angrenzt, aufweist, und der Außenteil (43) eine Energieversorgungseinrichtung (41) und die Kommunikationseinrichtung (42) aufweist, und die mindestens eine Messeinrichtung in dem Mittelteil (40) der Anordnung vorgesehen ist, wobei der Mittelteil (40) an die Gaseinfüllvorrichtung mit dem gasgefüllten Behälter grenzt.

## Claims

1. Assembly for monitoring containers which are filled with gas, having:
at least one measuring device for measuring at least one parameter of the gas in the container,
a communication device (42)
which is suitable for transmitting information about the gas to an evaluation device,
an energy supply device (41)
which is suitable for acquiring electrical energy from the surrounding electromagnetic radiation,
wherein
the energy supply device (41) is suitable for using electromagnetic radiation in the radiofrequency band and/or in the frequency band for TV signals and/or in the frequency band for mobile radio for the acquisition of energy, **characterized in that**
the at least one measuring device comprises a gas pressure-measuring device and a temperature-measuring device, wherein the evaluation device is suitable for calculating the density of the gas from the measured parameters of the gas pressure and the temperature, and **in that**
the assembly can be pushed onto a gas-filling apparatus of the container in order to retrofit a container, and **in that** the at least one measuring device is provided in a central part (40) of the assembly, which central part (40) adjoins the gas-filling apparatus with the container which is filled with gas, and **in that** the assembly has a socket (39) which can be pushed onto the gas-filling device, the central part (40) at the base of the socket (39) and an external part (43) which adjoins the central part (40), and
**in that** the external part (43) has the energy supply device (41) and the communication device (42).

2. Assembly according to Claim 1, **characterized in that** the communication device is suitable for manufacturing a radio link to the evaluation device.

3. Assembly according to Claim 1 or 2, **characterized in that** the energy supply device is suitable for using light by means of solar cells for the acquisition of energy.

4. Assembly according to one of the preceding claims, **characterized in that** an energy store is provided for buffering electrical energy which is generated by the energy supply device.

5. Assembly according to one of the preceding claims, **characterized in that** the at least one measuring device is assigned to a connecting apparatus which is suitable for connecting to a container.

6. System for monitoring containers which are filled with gas, having:
an assembly according to one of the preceding claims and a container which is filled with gas.

7. System according to Claim 6, **characterized in that** the container is an electrical installation which is filled with a protective gas.

8. System according to Claim 7, **characterized in that** the protective gas comprises sulfur hexafluoride.

9. System according to one of Claims 6 to 8, **characterized in that** the assembly is suitable for retrofitting a container onto the existing gas-filling apparatus thereof.

10. Method for monitoring containers which are filled with gas, in which
electrical energy for supplying energy to at least one measuring device and a communication device is acquired from the electromagnetic radiation which surrounds a container which is filled with gas, and
at least one parameter of the gas in the container is measured by means of the at least one measuring device, and
information about the gas is transmitted to the evaluation device by means of a communication device (42),
wherein the parameters of the gas pressure and the temperature are measured by means of the at least one measuring device, and the density of the gas is calculated from the measured parameters, and
for the electromagnetic radiation the radiofrequency band and/or the frequency band for TV signals and/or the frequency band for mobile radio are used for the acquisition of energy, and
the at least one measuring device and the communication device (42) are fitted, as part of an assembly for retrofitting a container, onto a gas-filling apparatus of the container, and the assembly has a socket (39) which can be pushed onto the gas-filling device, a central part (40) at the base of the socket, and an external part (43) which adjoins the central part (40), and
the external part (43) has an energy supply device (41) and the communication device (42), and the at least one measuring device is provided in the central part (40) of the assembly, wherein the central part (40) adjoins the gas-filling apparatus with the container which is filled with gas.

## Revendications

1. Agencement de contrôle de récipients remplis de gaz, comportant :
au moins un dispositif de mesure pour la mesure d'au moins un paramètre du gaz dans le récipient,
un dispositif (42) de communication, qui est propre à une transmission d'informations sur le gaz à un dispositif d'exploitation,
un dispositif (41) d'alimentation en énergie, qui est propre à obtenir de l'énergie électrique à partir du rayonnement électromagnétique ambiant,
dans lequel le dispositif (41) d'alimentation en énergie est propre à utiliser du rayonnement électromagnétique dans la bande de fréquence radio et/ou dans la bande de fréquence pour des signaux TV et/ou dans la bande de fréquence pour la téléphonie mobile afin d'obtenir de l'énergie, **caractérisé en ce que**
le au moins un dispositif de mesure comprend un dispositif de mesure de la pression du gaz et un dispositif de mesure de la température, le dispositif d'exploitation étant propre à calculer la masse volumique du gaz à partir des paramètres mesurés, pression du gaz et température, et **en ce que**
l'agencement peut, pour rééquiper un récipient, être mis sur un système de remplissage de récipient par du gaz et **en ce que** le au moins un dispositif de mesure est prévu dans une partie (40) médiane de l'agencement, qui est voisine du système de remplissage par du gaz avec le récipient rempli de gaz et **en ce que** l'agencement a une douille (39) qui peut être mise sur le dispositif de remplissage par du gaz, la partie (40) médiane au fond de la douille (39) et une partie (43) extérieure qui est voisine de la partie (40) médiane, et
**en ce que**
la partie (43) extérieure a le dispositif (41) d'alimentation en énergie et le dispositif (42) de communication.

2. Agencement suivant la revendication 1, **caractérisé en ce que** le dispositif de communication est propre à la production d'une liaison radio avec le dispositif d'exploitation.

3. Agencement suivant la revendication 1 ou 2, **caractérisé en ce que** le dispositif d'alimentation en énergie est propre à utiliser de la lumière au moyen de cellules solaires pour obtenir de l'énergie.

4. Agencement suivant l'une des revendications précédentes, **caractérisé en ce qu'**un accumulateur d'énergie est prévu pour l'accumulation intermédiaire de l'énergie électrique produite par le dispositif d'alimentation en énergie.

5. Agencement suivant l'une des revendications précédentes, **caractérisé en ce que** le au moins un dispositif de mesure est associé à un système de raccordement propre au raccordement à un récipient.

6. Système de contrôle de récipients remplis de gaz, comportant :
un agencement suivant l'une des revendications précédentes et un récipient rempli de gaz.

7. Système suivant la revendication 6, **caractérisé en ce que** le récipient est une installation électrique qui est remplie d'un gaz de protection.

8. Système suivant la revendication 7, **caractérisé en ce que** le gaz de protection comprend de l'hexafluorure de soufre.

9. Système suivant l'une des revendications 6 à 8, **caractérisé en ce que** l'agencement est propre à rééquiper un récipient sur son système existant de remplissage par du gaz.

10. Procédé de contrôle de récipients remplis de gaz, dans lequel
on obtient, à partir de rayonnement électromagnétique entourant un récipient rempli de gaz, de l'énergie électrique pour l'alimentation en énergie d'au moins un dispositif de mesure et d'un dispositif de communication, et
au moyen du au moins un dispositif de mesure, on mesure au moins un paramètre du gaz dans le récipient, et
on transmet des informations sur le gaz à un dispositif d'exploitation au moyen d'un dispositif (42) de communication,
dans lequel
on mesure les paramètres pression du gaz et température au moyen du au moins un dispositif de mesure, et
à partir des paramètres mesurés, on calcule la masse volumique du gaz, et
on utilise, pour obtenir de l'énergie, pour le rayonnement électromagnétique, la bande de fréquence radio et/ou la bande de fréquence pour des signaux TV et/ou la bande de fréquence pour la téléphonie mobile, et
on met le au moins un dispositif de mesure et le dispositif (42) de communication comme partie d'un agencement de rééquipement d'un récipient sur un dispositif de remplissage de récipient par du gaz, et
l'agencement a une douille (39) qui peut être mise sur le dispositif de remplissage par du gaz, une partie (40) médiane au fond de la douille et une partie (43) extérieure qui est voisine de la partie (40) médiane, et
la partie (43) extérieure a un dispositif (41) d'alimentation en énergie et le dispositif (42) de communication, et
le au moins un dispositif de mesure est prévu dans la partie (40) médiane de l'agencement, la partie (40) médiane étant voisine du système de remplissage par du gaz avec le récipient rempli de gaz.
